(19) **Europäisches Patentamt**
**European Patent Office**
**Office européen des brevets**

(11) **EP 2 445 153 A1**

(12) **EUROPEAN PATENT APPLICATION**
published in accordance with Art. 153(4) EPC

(43) Date of publication:
**25.04.2012 Bulletin 2012/17**

(51) Int Cl.:
*H04L 27/26* (2006.01)      *H04B 10/155* (2006.01)

(21) Application number: **10788894.3**

(22) Date of filing: **11.06.2010**

(86) International application number:
**PCT/CN2010/073793**

(87) International publication number:
**WO 2010/145498 (23.12.2010 Gazette 2010/51)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **15.06.2009 CN 200910107890**

(71) Applicants:
• **Huawei Technologies Co., Ltd.**
  **Shenzhen, Guangdong 518129 (CN)**
• **University Of Electronic Science And Technology Of China**
  **Sichuan 610054 (CN)**

(72) Inventors:
• **LI, Yonggang**
  **Chengdu**
  **Sichuan 610054 (CN)**
• **DENG, Mingliang**
  **Chengdu**
  **Sichuan 610054 (CN)**
• **ZHANG, Jing**
  **Chengdu**
  **Sichuan 610054 (CN)**
• **QIU, Kun**
  **Chengdu**
  **Sichuan 610054 (CN)**
• **LIU, Lei**
  **Shenzhen**
  **Guangdong 518129 (CN)**

(74) Representative: **Epping - Hermann - Fischer Patentanwaltsgesellschaft mbH**
**Ridlerstrasse 55**
**80339 München (DE)**

(54) **METHOD, DEVICE AND WAVE-DIVISION MULTIPLEXING SYSTEM FOR GENERATING AND RECEIVING OPTICAL ORTHOGONAL FREQUENCY DIVISION MULTIPLEXING SIGNAL**

(57) Embodiments of the present invention relate to the field of communications, and in particular, disclose a method and a device for generating and receiving an OOFDM signal, and a wavelength-division multiplexing system. The method for generating an OOFDM signal includes: converting a channel of serial high-speed data to N channels of parallel low-speed data; performing modulation mapping on the N channels of parallel low-speed data respectively to obtain N channels of information sequences; expanding the N channels of information sequences to 2N+2 channels of information sequences which have a Hermitian symmetric structure; performing inverse Fast Fourier Transform on the 2N+2 channels of information sequences, and then performing parallel-to-serial conversion to obtain an OFDM baseband signal; performing digital-to-analog conversion on the OFDM baseband signal to obtain an OFDM analog signal; and modulating the OFDM analog signal to an optical carrier to obtain an OOFDM signal. Receiving the OOFDM signal generated in the embodiments of the present invention does not require a complex algorithm to perform tracking and compensation on phase and frequency, which reduces the implementation cost of the system.

| Step | |
|---|---|
| Convert a channel of serial high-speed data to N channels of parallel low-speed data | S21 |
| Perform modulation mapping on the N channels of parallel low-speed data respectively according to a predetermined modulation mode to obtain N channels of information sequences | S22 |
| Expand the N channels of information sequences to 2N+2 channels of information sequences which have a Hermitian symmetric structure | S23 |
| Perform inverse Fast Fourier Transform on the 2N+2 channels of information sequences, and then perform parallel-to-serial conversion to obtain an OFDM baseband signal | S24 |
| Perform digital-to-analog conversion on the OFDM baseband signal to obtain an OFDM analog signal | S25 |
| Modulate the OFDM analog signal to an optical carrier to obtain an OOFDM signal | S26 |

FIG. 2

## Description

This application claims priority to Chinese Patent Application No. 200910107890.5, filed with the Chinese Patent Office on June 15, 2009 and entitled "METHOD AND DEVICE FOR GENERATING AND RECEIVING OOFDM SIGNAL, AND WAVELENGTH-DIVISION MULTIPLEXING SYSTEM", which is incorporated herein by reference in its entirety.

## FIELD OF THE INVENTION

The present invention relates to the field of communications, and in particular, to a method and a device for generating and receiving an OOFDM signal, and a wavelength-division multiplexing system.

## BACKGROUND OF THE INVENTION

Currently, with the rapid growth of broadband services, higher requirements are imposed on the network transmission capacity of a core backbone network, and accordingly, 100 Gb/s and over-100 Gb/s long-distance backbone fiber transmission systems are demanded.

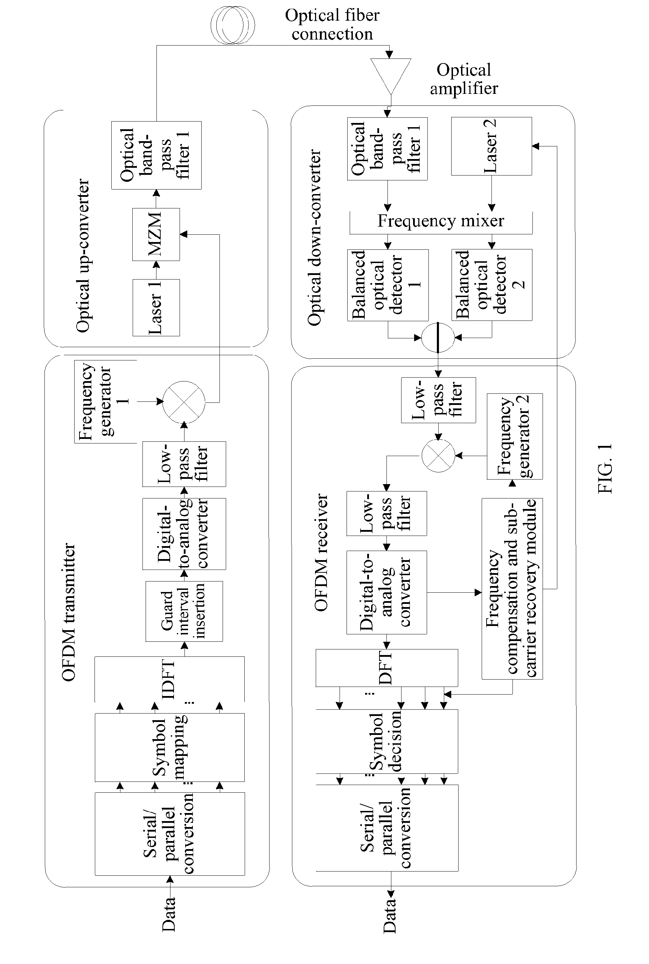

A solution for implementing 100 Gb/s signal transmission using a coherent optical orthogonal frequency division multiplexing (COOFDM) system emerges in the prior art, and the structure of the coherent optical orthogonal frequency division multiplexing system is as shown in FIG 1. The COOFDM system includes a sending end and a receiving end, where the sending end includes an orthogonal frequency division multiplexing transmitter and an optical up-converter, and the receiving end includes an optical down-converter and an orthogonal frequency division multiplexing receiver. The OFDM transmitter modulates a data stream to be sent to multiple sub-carriers that are orthogonal to each other to generate a baseband OFDM signal, then after an intermediate frequency modulator LO1 shifts the frequency spectrum of the baseband OFDM signal to an intermediate frequency, the OFDM signal whose frequency spectrum is shifted to the intermediate frequency is used to control a Mach-Zehnder Modulator MZM in the optical up-converter to modulate an optical carrier emitted by a laser 1, and an optical band-pass filter 1 is used to perform band-pass filtering on the signal output by the MZM to obtain an optical orthogonal frequency division multiplexing OOFDM signal.

At the receiving end of the COOFDM system, first, the OOFDM signal transmitted in an optical fiber is amplified, the amplified OOFDM signal is subjected to band-pass filtering by an optical band-pass filter 2 in the optical down-converter and then mixed together with local oscillation light generated by a laser 2, the mixed signal is subjected to balanced detection by a pair of balanced detectors (a balanced detector 1 and a balanced detector 2), and then the signal obtained after the balanced detection is input into the OFDM receiver for OFDM demodulation, so as to finally output a serial data stream.

The prior art has the following disadvantages: When the receiving end receives an OOFDM signal, the optical down-converter adopts coherent reception, and therefore, is sensitive to the frequency deviation between the local oscillation light and the optical carrier and phase noise, so that the laser 1 of the sending end and the laser 2 of the receiving end are required to have an extremely narrow line width, which increases the cost of the system, and a complex algorithm is required to perform tracking and control on the frequency and phase of the laser generated by the laser 2 at the receiving end. For example, a frequency compensation and sub-carrier recovery module in the OFDM receiver in FIG 1 requires a complex algorithm to perform tracking and control on the frequency and phase of the laser generated by the laser 2, so as to eliminate the frequency difference and phase difference between the local oscillation light and the optical carrier, which increases the implementation difficulty and cost of the system.

## SUMMARY OF THE INVENTION

An embodiment of the present invention provides a method for generating an OOFDM signal, where the method includes:

converting a channel of serial high-speed data to N channels of parallel low-speed data;
performing modulation mapping on the N channels of parallel low-speed data respectively according to a predetermined modulation mode to obtain N channels of information sequences;
expanding the N channels of information sequences to 2N+2 channels of information sequences which have a Hermitian symmetric structure;
performing inverse Fast Fourier Transform on the 2N+2 channels of information sequences, and then performing parallel-to-serial conversion to obtain an OFDM baseband signal;
performing digital-to-analog conversion on the OFDM baseband signal to obtain an OFDM analog signal; and
modulating the OFDM analog signal to an optical carrier to obtain an OOFDM signal.

An embodiment of the present invention further provides a method for receiving an OOFDM signal, where the method includes:

receiving an OOFDM signal, and performing direct detection on the OOFDM signal to obtain an OFDM analog signal;
converting the OFDM analog signal to an OFDM digital signal;
performing serial-to-parallel conversion on the OFDM digital signal to obtain 2N+2 channels of parallel digital signals;

performing Fast Fourier Transform on the 2N+2 channels of digital signals to obtain 2N+2 channels of information sequences which have a Hermitian symmetric structure;

selecting the $2^{nd}$ to $(N+1)^{th}$ channels of information sequences from the 2N+2 channels of information sequences which have the Hermitian symmetric structure for demodulation to obtain N channels of parallel low-speed data; and

performing parallel-to-serial conversion on the N channels of parallel low-speed data to obtain a channel of serial high-speed data.

An embodiment of the present invention further provides a device for generating an OOFDM signal, where the device includes

a serial-to-parallel conversion module, configured to convert a channel of serial high-speed data to N channels of parallel low-speed data;

a modulation mapping module, configured to perform modulation mapping on the N channels of parallel low-speed data respectively according to a predetermined modulation mode to obtain N channels of information sequences;

an expanding module, configured to expand the N channels of information sequences to 2N+2 channels of information sequences which have a Hermitian symmetric structure;

an inverse Fast Fourier Transform module, configured to perform inverse Fast Fourier Transform on the 2N+2 channels of information sequences to implement OFDM modulation to obtain 2N+2 channels of modulated signals;

a parallel-to-serial conversion module, configured to perform parallel-to-serial conversion on the 2N+2 channels of modulated signals to obtain an OFDM baseband signal;

a digital-to-analog converter, configured to convert the OFDM baseband signal to an OFDM analog signal; and

an optical modulator, configured to modulate the OFDM analog signal to an optical carrier to obtain an OOFDM signal.

An embodiment of the present invention further provides a device for receiving an OOFDM signal, where the device includes:

an optical detector, configured to receive an OOFDM signal, and perform direct detection on the OOFDM signal to obtain an OFDM analog signal;

an analog-to-digital converter, configured to convert the OFDM analog signal to an OFDM digital signal;

a serial-to-parallel conversion module, configured to perform serial-to-parallel conversion on the OFDM digital signal to obtain 2N+2 channels of parallel digital signals;

a Fast Fourier Transform module, configured to perform Fast Fourier Transform on the 2N+2 channels of digital signals to obtain 2N+2 channels of information sequences which have a Hermitian symmetric structure;

a demodulation module, configured to select the $2^{nd}$ to $(N+1)^{th}$ channels of information sequences from the 2N+2 channels of information sequences which have the Hermitian symmetric structure for demodulation to obtain N channels of parallel low-speed data; and

a parallel-to-serial conversion module, configured to perform parallel-to-serial conversion on the N channels of parallel low-speed data to obtain a channel of serial high-speed data.

An embodiment of the present invention further provides a device for generating a sub-carrier multiplexing OOFDM signal, where the device includes:

a first serial-to-parallel conversion module, configured to convert a channel of serial high-speed data to at least two channels of parallel low-speed data;

a first serial-to-parallel conversion sub-module, configured to convert one channel of low-speed data in the two channels of parallel low-speed data to $N_1$ channels of parallel data;

a second serial-to-parallel conversion sub-module, configured to convert the other channel of low-speed data in the two channels of parallel low-speed data to $N_2$ channels of parallel data;

a first modulation mapping module, configured to perform modulation mapping on the $N_1$ channels of parallel low-speed data respectively according to a predetermined modulation mode to obtain $N_1$ channels of information sequences;

a second modulation mapping module, configured to perform modulation mapping on the $N_2$ channels of parallel low-speed data respectively according to a predetermined modulation mode to obtain $N_2$ channels of information sequences;

a first expanding module, configured to expand the $N_1$ channels of information sequences to $2N_1+2$ channels of information sequences which have a Hermitian symmetric structure;

a second expanding module, configured to expand the $N_2$ channels of information sequences to $2N_2+2$ channels of information sequences which have a Hermitian symmetric structure;

a first inverse Fast Fourier Transform module, configured to perform inverse Fast Fourier Transform on the $2N_1+2$ channels of information sequences to implement OFDM modulation to obtain $2N_1+2$ channels of modulated signals;

a second inverse Fast Fourier Transform module, configured to perform inverse Fast Fourier Transform on the $2N_2+2$ channels of information sequences to implement OFDM modulation to obtain $2N_2+2$ channels of modulated signals;

a first parallel-to-serial conversion module, configured to perform parallel-to-serial conversion on the $2N_1+2$ channels of modulated signals to obtain a first OFDM baseband signal;

a second parallel-to-serial conversion module, configured to perform parallel-to-serial conversion on the $2N_2+2$ channels of modulated signals to obtain a second OFDM baseband signal;

a first cyclic-prefix adding module, configured to add a cyclic prefix in the first OFDM baseband signal to obtain a cyclic-prefix added first OFDM baseband signal;

a second cyclic-prefix adding module, configured to add a cyclic prefix in the second OFDM baseband signal to obtain a cyclic-prefix added second OFDM baseband signal;

a first digital-to-analog conversion module, configured to convert the cyclic-prefix added first OFDM baseband signal to a first OFDM analog signal;

a second digital-to-analog conversion module, configured to convert the cyclic-prefix added second OFDM baseband signal to a second OFDM analog signal;

a first intermediate-frequency modulation module, configured to shift a frequency spectrum of the first OFDM analog signal to a first intermediate frequency band to obtain an intermediate-frequency modulated first OFDM analog signal;

a second intermediate-frequency modulation module, configured to shift a frequency spectrum of the second OFDM analog signal to a second intermediate frequency band to obtain an intermediate-frequency modulated second OFDM analog signal;

a combiner, configured to combine the intermediate-frequency modulated first OFDM analog signal and the intermediate-frequency modulated second OFDM analog signal into one channel to obtain a sub-carrier multiplexing OFDM signal; and

an optical modulator, configured to modulate the sub-carrier multiplexing OFDM signal to an optical carrier to obtain a sub-carrier multiplexing OOFDM signal.

An embodiment of the present invention further provides a device for receiving a sub-carrier multiplexing OOFDM signal, where the device includes:

an optical detector, configured to receive a sub-carrier multiplexing OOFDM signal, and perform direct detection on the sub-carrier multiplexing OOFDM signal to obtain a sub-carrier multiplexing OFDM signal;

a splitter, configured to split the sub-carrier multiplexing OFDM signal into at least two channels of sub-carrier multiplexing OFDM signals;

a first intermediate-frequency demodulation module, configured to perform intermediate-frequency demodulation on one channel of the two channels of sub-carrier multiplexing OFDM signals to obtain a first OFDM analog signal;

a second intermediate-frequency demodulation module, configured to perform intermediate-frequency demodulation on the other channel of the two channels of sub-carrier multiplexing OOFDM signals to obtain a second OFDM analog signal;

a first analog-to-digital converter, configured to convert the first OFDM analog signal to a first OFDM baseband signal;

a second analog-to-digital converter, configured to convert the second OFDM analog signal to a second OFDM baseband signal;

a first cyclic-prefix removing module, configured to remove a cyclic prefix in the first OFDM baseband signal to obtain a cyclic-prefix removed first OFDM baseband signal;

a second cyclic-prefix removing module, configured to remove a cyclic prefix in the second OFDM baseband signal to obtain a cyclic-prefix removed second OFDM baseband signal;

a first serial-to-parallel conversion module, configured to convert the cyclic-prefix removed first OFDM baseband signal to $2N_1+2$ channels of parallel signals;

a second serial-to-parallel conversion module, configured to convert the cyclic-prefix removed second OFDM baseband signal to $2N_2+2$ channels of parallel signals;

a first Fast Fourier Transform module, configured to perform Fourier Transform on the $2N_1+2$ channels of parallel signals to obtain $2N_1+2$ channels of information sequences which have a Hermitian symmetric structure;

a second Fast Fourier Transform module, configured to perform Fourier Transform on the $2N_2+2$ channels of parallel signals to obtain $2N_2+2$ channels of information sequences which have a Hermitian symmetric structure;

a first demodulation module, configured to select the $2^{nd}$ to $(N_1+1)^{th}$ channels of information sequences from the $2N_1+2$ channels of information sequences which have the Hermitian symmetric structure for demodulation to obtain $N_1$ channels of parallel data;

a second demodulation module, configured to select the $2^{nd}$ to $(N_2+1)^{th}$ channels of information sequences from the $2N_2+2$ channels of information sequences which have the Hermitian symmetric structure for demodulation to obtain $N_2$ channels of parallel data;

a first parallel-to-serial conversion sub-module, configured to perform parallel-to-serial conversion on the $N_1$ channels of parallel data to obtain a first channel of serial data;

a second parallel-to-serial conversion sub-module, configured to perform parallel-to-serial conversion on the $N_2$ channels of parallel data to obtain a second channel of serial data;

a parallel-to-serial conversion module, configured to perform parallel-to-serial conversion on the first channel of serial data and the second channel of serial data to obtain a channel of serial data.

An embodiment of the present invention further provides a wavelength-division multiplexing system, including a wavelength-division multiplexing end and a wavelength-division demultiplexing end, where the wavelength-division multiplexing end includes a multiplexer and at least one of the foregoing device for generating an OOFDM signal, where the device for generating an OOFDM signal is configured to modulate one of wavelengths to obtain an OOFDM signal, and the multiplexer is configured to multiplex the OOFDM signal and a signal that has another wavelength to form a channel of multiplexed signal; and
the wavelength-division demultiplexing end includes a demultiplexer and at least one of the foregoing device for receiving an OOFDM signal, where the demultiplexer is configured to demultiplex the multiplexed signal obtained by the multiplexer; and the device for receiving an OOFDM signal receives an OOFDM signal obtained by demultiplexing and recovers original data.

In the embodiments of the present invention, during the process of generating an OOFDM signal, characteristics of the Hermitian symmetric structure are utilized, so that the OFDM baseband signal obtained after the inverse Fast Fourier Transform is a real signal that only includes amplitude information, and the finally-obtained OOFDM signal only carries amplitude information. Therefore, when the receiving end receives the OOFDM signal, coherent reception is not required, and the OOFDM signal may be converted to an OFDM signal by simply adopting a direct detection method, so that the receiving end does not require a local oscillation light source, and therefore, does not require an algorithm to perform tracking and compensation on the frequency and phase of the local oscillation light, thus reducing the implementation difficulty and cost of the receiver at the receiving end, and lowering the requirements for the line width of the laser that generates the optical carrier.

## BRIEF DESCRIPTION OF THE DRAWINGS

To illustrate the technical solutions according to the embodiments of the present invention or in the prior art more clearly, accompanying drawings required for describing the embodiments or the prior art are introduced below briefly. Apparently, the accompanying drawings in the following descriptions are merely some embodiments of the present invention, and persons of ordinary skill in the art may further obtain other drawings according to the accompanying drawings without creative efforts.

FIG 1 is a schematic structural diagram of a COOFDM system in the prior art;
FIG 2 is a schematic flowchart of a method for generating an OOFDM signal according to an embodiment of the present invention;
FIG 3 is a constellation diagram of a 16QAM modulation mode;
FIG 4 is a schematic diagram of a method for receiving an OOFDM signal according to an embodiment of the present invention;
FIG 5 is a first schematic structural diagram of a device for generating an OOFDM signal according to an embodiment of the present invention;
FIG 6 is a working principle diagram of an expanding module according to an embodiment of the present invention;
FIG 7 is a second schematic structural diagram of a device for generating an OOFDM signal according to an embodiment of the present invention;
FIG 8 is a third schematic structural diagram of a device for generating an OOFDM signal according to an embodiment of the present invention;
FIG 9 is a first schematic structural diagram of a device for receiving an OOFDM signal according to an embodiment of the present invention;
FIG 10 is a second schematic structural diagram of a device for receiving an OOFDM signal according to an embodiment of the present invention;
FIG 11 is a third schematic structural diagram of a device for receiving an OOFDM signal according to an embodiment of the present invention;
FIG 12 is a schematic structural diagram of a device for generating a sub-carrier multiplexing OOFDM signal according to an embodiment of the present invention;
FIG 13 is a schematic structural diagram of a device for receiving a sub-carrier multiplexing OOFDM signal according to an embodiment of the present invention; and
FIG 14 is a schematic structural diagram of a wavelength-division multiplexing system according to an embodiment of the present invention.

## DETAILED DESCRIPTION OF THE EMBODIMENTS

The technical solutions according to the embodiments of the present invention are clearly and fully described below with reference to the accompanying drawings in the embodiments of the present invention. Obviously, the embodiments to be described are only part of rather than all of the embodiments of the present invention. All other embodiments obtained by persons of ordinary skill in the art based on the embodiments of the present invention without creative efforts shall fall within the protection scope of the present invention. Embodiments of the present invention provide a method and a device for generating and receiving an OOFDM signal, and a wavelength-division multiplexing system.
The technical solutions of the present invention are described below with reference to the accompanying drawings and embodiments.

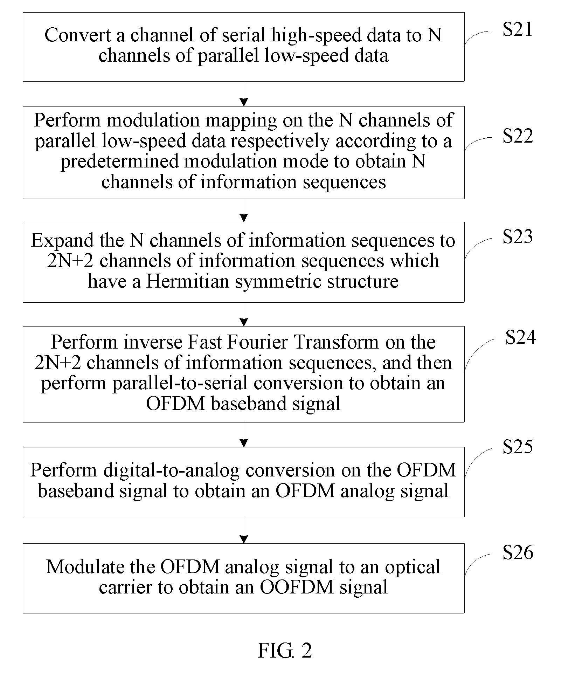

An embodiment of the present invention provides a method for generating an optical orthogonal frequency division multiplexing OOFDM signal, and reference may be made to FIG 2 for a schematic flowchart of the method.

Step S21: Convert a channel of serial high-speed data to N channels of parallel low-speed data.

In this embodiment, high-speed data and low-speed data are relative concepts. The transmission rate of the channel of serial data is high as compared with the transmission rate of each channel of data of the N channels of parallel data after conversion. For example, the transmission rate of the serial data is 100 Gbit/s before conversion, and if the serial data is converted to 2 channels of parallel data that have the same transmission rate and each channel of data has a transmission rate of 50 Gbit/s, the data having the transmission rate of 100 Gbit/s is high-speed data as compared with the data having the transmission rate of 50 Gbit/s, and the data having the transmission rate of 50 Gbit/s is low-speed data as compared with the data having the transmission rate of 100 Gbit/s. Likewise, the explanation for high-speed data and low-speed data is also applicable to conversion of multiple channels of parallel data to one channel of serial data, and the explanation is also applicable to other embodiments in this application.

The embodiment of the present invention also gives an example of conversion of serial data to parallel data. For example, for a channel of 100 Gbit/s serial data "...1101 0111 0100 1010 0111 1101 1100 1010... ", the serial data is converted to 2 channels of parallel data: the first channel is "...1101 0100 0111 1100...", and the second channel is "...0111 1010 1101 1010...".

Step S22: Perform modulation mapping on the N channels of parallel low-speed data respectively according to a predetermined modulation mode to obtain N channels of information sequences.

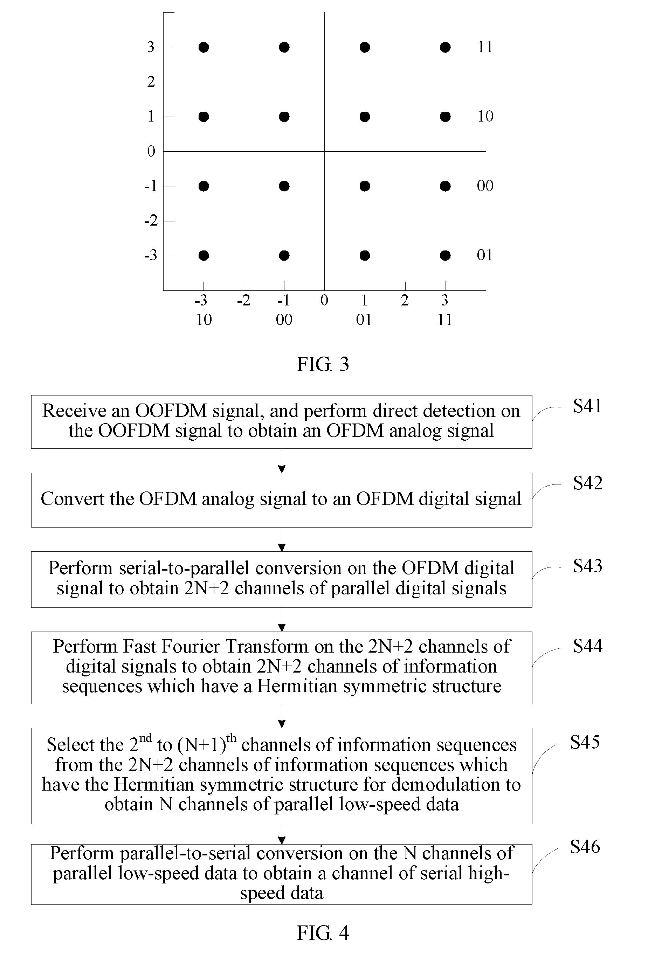

Specifically, each channel of the low-speed data is mapped according to a constellation diagram corresponding to a modulation mode to obtain an information sequence corresponding to each channel of data. When modulation mapping is performed on each channel of low-speed data, a constellation diagram corresponding to a same modulation mode may be adopted for mapping, or constellation diagrams corresponding to different modulation modes may be adopted for mapping. The embodiment of the present invention does not limit the modulation mode, and the predetermined modulation mode may be a modulation mode such as MPSK or MQAM. For example, a constellation diagram corresponding to a 16QAM modulation mode is adopted to perform modulation mapping on both the first channel of data and the second channel of data respectively. FIG 3 gives a constellation diagram corresponding to the 16QAM modulation mode. In the constellation diagram shown in FIG 3, the transverse axis represents an in-phase component, and the longitudinal axis represents a longitudinal component, for example, data "1101" is mapped to: 3-3j. According to the constellation diagram shown in FIG 3, after modulation mapping is performed on the first channel of data "...1101 0100 0111 1100...", an information sequence $X_1$ is obtained: "...3-3j, 1-j, 1+3j, 3-j..."; after modulation mapping is performed on the second channel of data "...0111 1010 1101 1010...", an information sequence $X_2$ is obtained: "...1+3j, -3+j, 3-3j, -3+j...".

Step S23: Expand the N channels of information sequences to 2N+2 channels of information sequences which have a Hermitian symmetric structure.

In step S22, after the N channels of parallel low-speed data are modulated respectively, N channels of information sequences are obtained: $X_1$, $X_2$, ..., $X_N$. According to characteristics of the Hermitian symmetric structure, the N channels of information sequences are expanded to 2N+2 channels of information sequences:

$$0,\ X_1,\ X_2,\ ...,\ X_N,\ 0,\ X_N^*,\ ...,\ X_2^*,\ X_1^*,$$

and this arrangement structure is called the Hermitian symmetric structure, where, $X_k^*$ is a complex conjugate signal of $X_k$ ($1 \leq k \leq N$, and k is an integer). In the 2N+2 channels of information sequences, the 1$^{st}$ channel of information sequence and the (N+2)$^{th}$ channel of information sequence are constant 0 sequences, the 2$^{nd}$ to (N+1)$^{th}$ channels of information sequences are sequentially: $X_1$, $X_2$, ..., $X_N$, and the (N+3)$^{th}$ to (2N+2)$^{th}$ channels of information sequences are sequentially:

$$X_N^*,\ ...,\ X_2^*,\ X_1^*.$$

For example, the foregoing information sequences $X_1$ and $X_1$ are expanded to six channels of information sequences: $0$, $X_1$, $X_{2,}$ $0$, $X_2^*$, $X_1^*$. The information sequence $X_1^*$ is: "...3+3j, 1+j, 1-3j, 3+j...", and the information sequence $X_2^*$ is: "...1-3j, -3-j, 3+3j, -3-j...".

Step S24: Perform inverse Fast Fourier Transform on the 2N+2 channels of information sequences, and then perform parallel-to-serial conversion to obtain an OFDM baseband signal.

In this step, inverse Fast Fourier Transform is performed on the foregoing obtained 2N+2 channels of information sequences: $0$, $X_1$, $X_2$, ..., $X_N$, $0$, $X_N^*$, ..., $X_2^*$, $X_1^*$, to obtain 2N+2 channels of signals. The process of performing inverse Fast Fourier Transform on the 2N+2 channels of information sequences is actually a process of implementing orthogonal frequency division multiplexing modulation. Parallel-to-serial conversion is performed on the 2N+2 channels of signals to obtain a channel of signal, and the channel of signal is an OFDM baseband signal.

Step S25: Perform digital-to-analog conversion on the OFDM baseband signal to obtain an OFDM analog signal.

A digital-to-analog converter is adopted to convert the OFDM baseband signal obtained in the previous step to an OFDM analog signal.

Step S26: Modulate the OFDM analog signal to an optical carrier to obtain an OOFDM signal.

Specifically, the OFDM analog signal may be modulated to an optical carrier through a Mach-Zehnder Modulator (MZM).

In this embodiment, by utilizing the characteristics of the Hermitian symmetric structure, the N channels of information sequences are expanded to 2N+2 channels of information sequences, and then inverse Fast Fourier Transform is performed on the 2N+2 channels of information sequences to implement OFDM modulation, so that the 2N+2 channels of signals obtained after inverse Fast Fourier Transform are all real signals, the finally-obtained OFDM baseband signal is also a real signal, the OFDM analog signal obtained after analog-to-digital conversion is also a real signal, and the finally-obtained OOFDM signal only carries amplitude information. Therefore, when the receiving end receives the OOFDM signal, phase information of the signal does not need to be taken into consideration, coherent reception is not required, and the OFDM signal may be recovered simply by direct detection, so that the receiving end does not require a local oscillation light source, and therefore, does not require an algorithm to perform tracking and compensation on the frequency and phase of the local oscillation light. By adopting the method for generating an OOFDM signal, the requirements for the line width of the laser that generates the optical carrier are lowered.

In another embodiment, after step S24, the method may further include: adding a cyclic prefix in the obtained OFDM baseband signal. Correspondingly, step S25 is specifically: performing digital-to-analog conversion on a cyclic-prefix added OFDM baseband signal to obtain the OFDM analog signal. After the cyclic prefix is added in the OFDM baseband signal, the finally-generated OOFDM signal may resist inter-symbol interference and inter-carrier interference that are caused by fiber dispersion during the transmission process.

In another embodiment, after step S25, the method may further include: linearly shifting a frequency spectrum of the obtained OFDM analog signal to an intermediate frequency band to obtain an intermediate-frequency modulated OFDM analog signal. Correspondingly, step S26 is specifically: modulating the intermediate-frequency modulated OFDM analog signal to the optical carrier to obtain the OOFDM analog signal. A specific implementation method for linearly shifting the frequency spectrum of the OFDM analog signal to the intermediate frequency band may be: multiplying the OFDM analog signal by a sine signal of an intermediate frequency (for example, 7.5 GHz) or a cosine signal of an intermediate frequency (for example, 7.5 GHz), so as to linearly shift the frequency spectrum of the OFDM analog signal to the intermediate frequency band, so that the frequency spectrum is mainly distributed around 7.5 GHz. The finally-obtained frequency spectrum of the OOFDM signal is mainly distributed in a frequency band at a certain interval from the frequency of the optical carrier, rather than near the frequency of the optical carrier. For example, if the frequency of the optical carrier is 193.5 THz, and the frequency of the intermediate frequency signal is 7.5 GHz, the frequency spectrum of the OOFDM signal is mainly distributed around 193.5 THz + 7.5 GHz and 193.5 THz - 7.5 GHz, which can prevent generation of a second order intermodulation product, thus reducing the influence of non-linear effects. In this embodiment, band-pass filtering may be further performed on the intermediate-frequency modulated OFDM analog signal, so as to filter off noise introduced by intermediate-frequency modulation.

In any one of the foregoing embodiments, after step S25, low-pass filtering may be further performed on the obtained OFDM analog signal, which may increase a signal-to-noise ratio, thus reducing the bit error rate of the receiving end.

In any one of the foregoing embodiments, the finally-obtained OOFDM signal is a double sideband signal, and therefore, a filter may be adopted to filter the OOFDM signal, so as to filter off one sideband (upper sideband or lower sideband) in the two sidebands to obtain a single sideband OOFDM signal. The single sideband OOFDM signal has the same transmission performance as a double sideband OOFDM signal, but the transmission bandwidth occupied by the single sideband OOFDM signal is only half of the transmission bandwidth occupied by the double sideband OOFDM signal, which saves bandwidth resources, and meanwhile, the power utilization ratio of the single sideband OOFDM signal is twice that of the double sideband OOFDM signal.

For an OOFDM signal generated at a sending end, an embodiment of the present invention further provides a method for receiving an OOFDM signal at a receiving end, and a schematic flowchart of the method is as shown in FIG 4.

Because two sidebands in a double sideband OOFDM signal carry completely same information, a method for receiving a double sideband OOFDM signal and a method for receiving a single sideband OOFDM signal are completely the same. The following description of the receiving method is given without differentiating whether the OOFDM signal is a single sideband signal or a double sideband signal.

Step S41: Receive an OOFDM signal, and perform direct detection on the OOFDM signal to obtain an OFDM analog signal.

In this step, because the OOFDM signal only includes amplitude information, phase information does not need to be taken into consideration. Therefore, an OFDM direct detection method may be adopted to perform detection on the OOFDM signal.

Step S42: Convert the OFDM analog signal to an OFDM digital signal.

An analog-to-digital converter may be utilized to convert the OFDM analog signal to an OFDM digital signal.

Step S43: Perform serial-to-parallel conversion on the OFDM digital signal to obtain 2N+2 channels of parallel digital signals.

The value of N in this embodiment is the same as that of N in the sending end, for example, if the value ofN in the sending end is 2, the value ofN in this step is also 2.

Step S44: Perform Fast Fourier Transform on the 2N+2 channels of parallel digital signals to obtain 2N+2 channels of information sequences which have a Hermitian symmetric structure.

In this step, the process of performing Fast Fourier Transform on the 2N+2 channels of digital signals is actually a process of OFDM demodulation, and how to perform Fast Fourier Transform belongs to the prior art, and is not detailed here. The 2N+2 channels of information sequences after Fourier Transform may be expressed as: $0, Y_1, Y_2, ..., Y_N, 0, Y_N^*, ..., Y_2^*, Y_1^*$.

Step S45: Select the $2^{nd}$ to $(N+1)^{th}$ channels of information sequences from the 2N+2 channels of information sequences which have the Hermitian symmetric structure for demodulation to obtain N channels of parallel low-speed data.

Specifically, $Y_1, Y_2, ..., Y_N$ are selected from the 2N+2 channels of information sequences: $0, Y_1, Y_2, ..., Y_{N, 0}, Y_N^*, ..., Y_2^*, Y_1^*$, for demodulation. In this step, demodulation is a reverse process to modulation mapping at the sending end. For example, at the sending end, the information sequence $X_1$ is obtained by mapping data according to a constellation diagram of 16QAM modulation (for example, the constellation diagram shown in FIG 3), in this step, the same constellation diagram (for example, the constellation diagram shown in FIG 3) is used to demodulate the information sequence $Y_1$. For example, "-1+3j" in the information sequence $Y_1$ is demodulated according to the constellation diagram shown in FIG 3 to obtain data "0011".

Step S46: Perform parallel-to-serial conversion on the N channels of parallel low-speed data to obtain a channel of serial high-speed data.

In this embodiment, because the received OOFDM signal only carries amplitude information, phase information does not need to be taken into consideration, the OOFDM signal may be converted to an OFDM signal by adopting a direct detection method, which does not require local oscillation light, and therefore, does not require an algorithm to perform tracking and compensation on the phase and frequency of the local oscillation light.

In another embodiment, if intermediate-frequency modulation is involved in the process that the sending end generates the OOFDM signal, after step S41, the method further includes: performing intermediate-frequency demodulation on the OFDM analog signal obtained in step S41 to obtain an OFDM analog baseband signal, and a specific implementation method is: multiplying an intermediate frequency signal of the same frequency as that for intermediate-frequency modulation at the sending end with the OFDM analog signal, to obtain the OFDM analog signal. Step S42 is specifically: converting the OFDM analog baseband signal to the OFDM digital signal.

In another embodiment, if adding a cyclic prefix is involved in the process that the sending end generates the OOFDM signal, before step S43, the method further includes: removing a cyclic prefix in the OFDM digital signal.

In any one of the foregoing embodiments, after step S41, band-pass filtering may be further performed on the obtained OFDM analog signal, and subsequent processing is performed on the OFDM analog signal from which noise is filtered off. Here, band-pass filtering is performed on the OFDM analog signal, so as to reduce a bit error rate, thus improving the performance of the system.

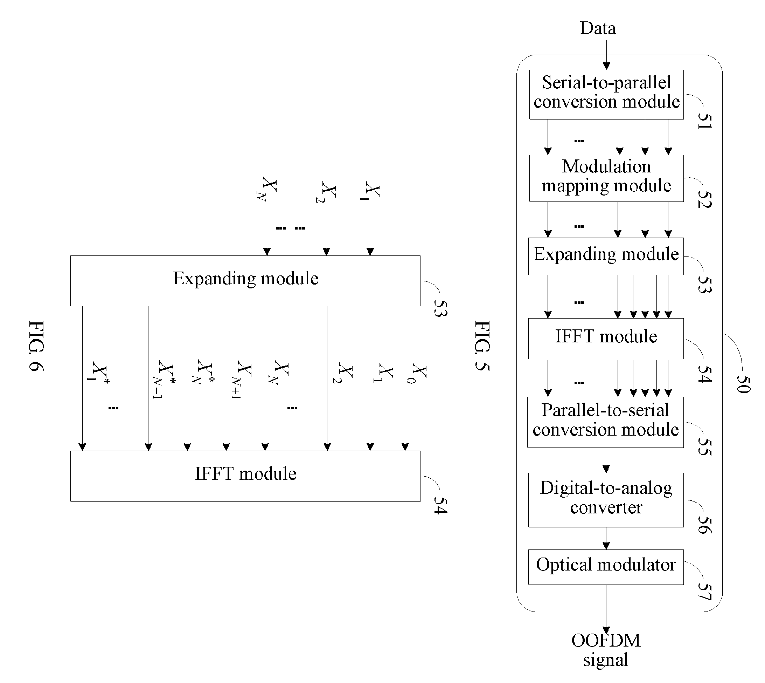

An embodiment of the present invention further provides a device for generating an OOFDM signal, and a structure of the device for generating an OOFDM signal is as shown in FIG 5. The device 50 includes: a serial-to-parallel conversion module 51, a modulation mapping module 52, an expanding module 53, an inverse Fast Fourier Transform IFFT module 54, a parallel-to-serial conversion module 55, a digital-to-analog converter 56 and an optical modulator 57.

The serial-to-parallel conversion module 51 converts a channel of serial high-speed data to N channels of parallel low-speed data. N is an integer greater than or equal to 2, but the specific value is not limited in this application.

The modulation mapping module 52 performs modulation mapping on the N channels of parallel low-speed data respectively according to a predetermined modulation mode to obtain N channels of information sequences. The modulation mapping module 52 specifically maps each channel of low-speed data according to a constellation diagram corresponding to a modulation mode. When modulation mapping is performed on each channel of low-speed data, a constellation diagram corresponding to a same modulation mode may be adopted for mapping, or constellation diagrams corresponding to different modulation modes may be adopted for mapping. The embodiment of the present invention does not limit the modulation mode corresponding to which the constellation diagram is adopted by the modulation mapping module for mapping, for example, a constellation diagram corresponding to a modulation mode such as MPSK or MQAM may be adopted.

The expanding module 53 expands the N channels of information sequences to 2N+2 channels of information sequences, specifically according to characteristics of the Hermitian symmetric structure. Referring to FIG 6, assuming that $X_1, X_2, ..., X_N$ are used to represent the N channels of information sequences obtained by the modulation mapping module, after expanding the N channels of information sequences, the expanding module 53 obtains 2N+2 channels of information sequences: $0, X_1, X_2, ..., X_N, 0, X_N^*, ..., X_2^*, X_1^*$, and this arrangement structure is called the Hermitian symmetric structure, where, $X_k^*$ is a complex conjugate signal of $X_k$ ($1 \leq k \leq N$, and k is an integer). In the 2N+2 channels of information sequences, the 1st channel of information sequence and the (N+2)th channel of information sequence are constant 0 sequences, the 2nd to (N+1)th channels of information sequences are sequentially: $X_1, X_2, ..., X_N$, and the (N+3)th to (2N+2)th channels of information sequences are sequentially:

$$X_N^*, ..., X_2^*, X_1^*.$$ As shown in FIG 6, the 2N+2 channels of information sequences: $0, X_1, X_2, ..., X_N, 0,$

$$X_N^*, ..., X_2^*, X_1^*,$$ obtained by the expanding module are used as 2N+2 channels of inputs of the IFFT module.

The IFFT module 54 performs IFFT transform on the 2N+2 channels of information sequences which have the Hermitian symmetric structure to obtain 2N+2 channels of modulated signals. The process that the IFFT module 54 performs IFFT transform on the 2N+2 channels of information sequences is actually a process of implementing OFDM modulation. Then, the parallel-to-serial conversion module 55 performs parallel-to-serial conversion on the 2N+2 channels of modulated signals to obtain an OFDM baseband signal.

The digital-to-analog converter 56 converts the OFDM baseband signal to an OFDM analog signal.

The optical modulator 57 modulates the OFDM analog signal to an optical carrier to obtain an OOFDM signal. In this embodiment, the optical modulator may be an MZM modulator.

In this embodiment, because the N channels of information sequences obtained by the modulation mapping module 52 are expanded to the 2N+2 channels of information sequences which have the Hermitian symmetric structure, the IFFT module 53 performs inverse Fast Fourier Transform on the 2N+2 channels of information sequences which have the Hermitian symmetric structure, and the 2N+2 channels of modulated signals obtained after transform are all real signals, the OFDM baseband signal obtained after the parallel-to-serial conversion module 55 performs parallel-to-serial conversion on the 2N+2 channels of modulated signals is also a real signal, the OFDM analog signal obtained after digital-to-analog conversion is also a real signal, and accordingly the OOFDM signal only carries amplitude information. Therefore, the device at the receiving end does not need to take phase information of the signal into consideration, does not require to perform coherent reception, and may recover the OFDM signal simply by direct detection, which does not require a local oscillation light source, and therefore, does not require an algorithm to perform tracking and compensation on the frequency and phase of the local oscillation light. In this embodiment, because the OFDM analog signal modulated to the optical carrier is a real signal, the requirements for the line width of the laser that generates the optical carrier are lowered.

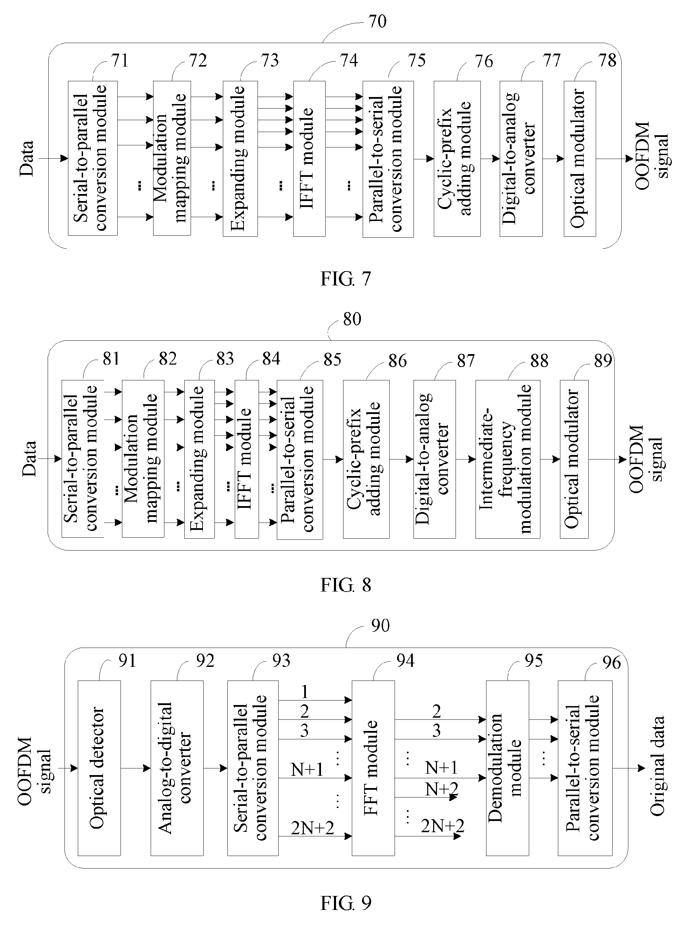

In another embodiment, a device for generating an OOFDM signal having a structure shown in FIG 7 is different from the device shown in FIG 5 in that, a cyclic-prefix adding module 76 is added between the parallel-to-serial conversion module 75 and the digital-to-analog converter 77. The cyclic-prefix adding module 76 is configured to add a cyclic prefix in the OFDM baseband signal obtained by the parallel-to-serial conversion module to obtain a cyclic-prefix added OFDM baseband signal, and the digital-to-analog converter 77 is specifically configured to convert the cyclic-prefix added OFDM baseband signal to an OFDM analog signal. Because a cyclic redundancy prefix is added in the OFDM baseband signal, the subsequently-generated OOFDM signal may resist inter-symbol interference and inter-carrier interference that are caused by fiber dispersion during the transmission process.

In another embodiment, an intermediate-frequency modulation module may also be added on the basis of the device having the structure shown in FIG 5. The intermediate-frequency modulation module is configured to shift a frequency spectrum of the OFDM analog signal obtained by the analog-to-digital converter to an intermediate frequency band to obtain an intermediate-frequency modulated OFDM analog signal, and the optical modulator is specifically configured to modulate the intermediate-frequency modulated OFDM analog signal to an optical carrier. The frequency spectrum of the finally-generated OOFDM signal is mainly distributed in a frequency band at a certain interval from the frequency of the optical carrier, which may prevent generation of a second order intermodulation product, thus reducing the influence of non-linear effects.

In another embodiment, a device for generating an OOFDM signal having a structure shown in FIG 8 is different from the device having the structure shown in FIG 5 in that, a cyclic-prefix adding module 86 is added between the parallel-to-serial conversion module 85 and the digital-to-analog converter 87; and an intermediate-frequency modulation module is added between the digital-to-analog converter and the optical modulator. The cyclic-prefix adding module 86 is configured to add a cyclic prefix module in the OFDM baseband signal obtained by the parallel-to-serial conversion module 85, the digital-to-analog converter specifically converts the cyclic-prefix added OFDM baseband signal to an OFDM analog signal, the intermediate-frequency modulation module specifically shifts a frequency spectrum of the OFDM analog signal to an intermediate frequency band to obtain an intermediate-frequency modulated OFDM analog signal, and the optical modulator specifically modulates the intermediate-frequency modulated OFDM analog signal to an optical carrier. In this embodiment, because a cyclic prefix is added and the frequency spectrum is shifted using intermediate-frequency modulation during the process of generating an OOFDM signal, the finally-generated OOFDM signal not only may resist inter-symbol interference and inter-carrier interference that are caused by fiber dispersion during the transmission process, but also may prevent generation of a second order intermodulation product, thus reducing the influence of non-linear effects.

An embodiment of the present invention further provides a device for receiving an OOFDM signal, and a structure of the device for receiving an OOFDM signal is as shown in FIG 9. The device includes: an optical detector 91, an analog-to-digital converter 92, a serial-to-parallel conversion module 93, a Fast Fourier Transform (FFT) module 94, a demodulation module 95 and a parallel-to-serial conversion module 96.

The optical detector 91 receives an OOFDM signal transmitted in an optical fiber, and performs direct detection on the OOFDM signal to obtain an OFDM analog signal. The analog-to-digital converter 92 performs analog-to-digital conversion on the OFDM analog signal to obtain an OFDM digital signal. The serial-to-parallel conversion module 93 converts the OFDM digital signal to $2N+2$ channels of parallel digital signals, where the value of N in this embodiment is the same as the value of N in the device for generating an OOFDM signal, for example, if the value of N in the device for generating an OOFDM signal is 2, the value of N here is also 2. The FFT module 94 performs Fast Fourier Transform on the $2N+2$ channels of digital signals to obtain $2N+2$ channels of information sequences which have a Hermitian symmetric structure. The process that the FFT module 94 performs Fast Fourier Transform on the $2N+2$ channels of digital signals is actually a process of implementing OFDM demodulation. The demodulation module 95 selects the $2^{nd}$ to $(N+1)^{th}$ channels of information sequences from the $2N+2$ channels of information sequences which have the Hermitian symmetric structure for demodulation to obtain N channels of parallel low-speed data. Assuming that the $2N+2$ channels of information sequences which have the Hermitian symmetric structure and are obtained by the FFT module 94 are expressed as: $0, Y_1, Y_2, ..., Y_N, 0, Y_N^*, ..., Y_2^*, Y_1^*$, the demodulation module 95 selects "$Y_1, Y_2, ..., Y_N$" channels

of information sequences for demodulation respectively. Here, demodulation is a reverse process to modulation mapping in the device for generating an OOFDM signal. For example, in the device for generating an OOFDM signal, the information sequence $X_1$ is obtained by the modulation mapping module through mapping data according a constellation diagram of 16QAM modulation (for example, the constellation diagram shown in FIG 3), and the demodulation module 95 adopts the same constellation diagram (for example, the constellation diagram shown in FIG 3) to demodulate the information sequence, for example, "-1+3j" in the information sequence is demodulated according to the constellation diagram shown in FIG 3 to obtain data "0011". The parallel-to-serial conversion module 96 converts the obtained N channels of parallel low-speed data to a channel of serial high-speed data.

Compared with the prior art, this embodiment does not need to use a coherent reception method to convert an OOFDM signal to an OFDM signal, and may convert an OOFDM signal to an OFDM signal simply by a direct detection method, which does not require a local oscillation light source, and therefore, does not require an algorithm to perform tracking and compensation on the frequency and phase of the local oscillation light, so that the device is easy to implement and the cost is reduced.

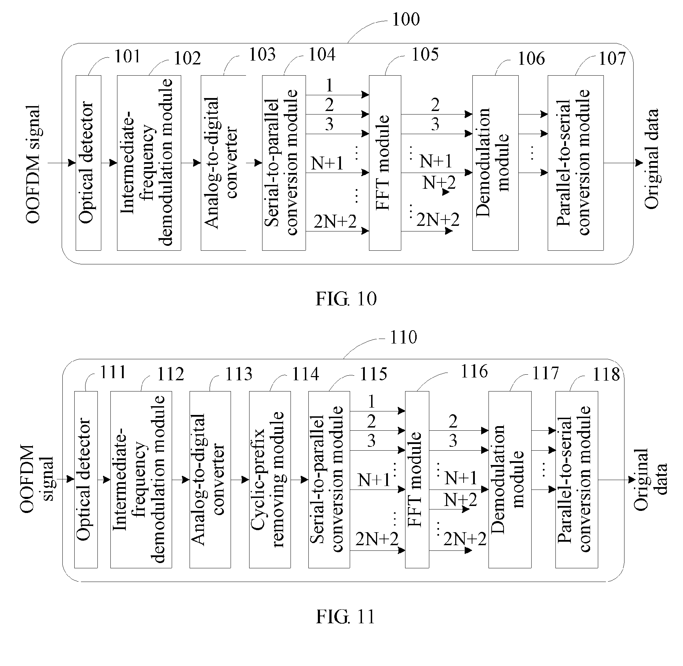

If the OOFDM signal is obtained by modulating an intermediate-frequency modulated OFDM analog signal to an optical carrier, only an intermediate-frequency demodulation module needs to be added in the device having the structure shown in FIG 9, so as to obtain a device for receiving an OOFDM signal having a structure shown in FIG 10. In the device, the intermediate-frequency demodulation module 102 is configured to perform intermediate-frequency demodulation on the OFDM analog signal obtained by the optical modulator to obtain an intermediate-frequency demodulated OFDM analog signal, and the digital-to-analog converter 103 is specifically configured to convert the intermediate-frequency demodulated OFDM analog signal to a digital signal. On the basis of this, a low-pass filter may further be added to filter the intermediate-frequency demodulated OFDM analog signal, so as to eliminate noise introduced during intermediate-frequency demodulation.

If a cyclic prefix is added in an OFDM baseband signal in the process of generating an OOFDM signal, only a cyclic-prefix removing module needs to be added in the device having the structure shown in FIG 9, where the cyclic-prefix removing module is located behind the digital-to-analog converter and before the serial-to-parallel conversion module. The cyclic-prefix removing module is configured to remove a cyclic prefix in the OFDM digital signal obtained by the digital-to-analog converter. The serial-to-parallel conversion module is specifically configured to convert a cyclic-prefix removed OFDM digital signal to $2N+2$ channels of parallel digital signals.

In another embodiment, if both adding a cyclic prefix and intermediate-frequency modulation are involved in the process of generating an OOFDM signal, a receiving device having a structure shown in FIG 11 is adopted to receive the OOFDM signal. The receiving device having the structure shown in FIG 11 is different from the receiving device having the structure shown in FIG 9 in that, an intermediate-frequency demodulation module 112 is added between the optical detector 111 and the analog-to-digital converter 113; and a cyclic-prefix removing module is added between the digital-to-analog converter 113 and the serial-to-parallel conversion module 115. The intermediate-frequency demodulation module 112 performs intermediate-frequency demodulation on the OFDM analog signal obtained by the optical detector 111 to obtain an intermediate-frequency demodulated OFDM analog signal, the analog-to-digital converter 113 is specifically configured to convert the intermediate-frequency demodulated OFDM analog signal to an OFDM digital signal, the cyclic-prefix removing module 114 is configured to remove a cyclic prefix in the OFDM digital signal, and the serial-to-parallel conversion module 115 is specifically configured to convert a cyclic-prefix removed OFDM digital signal to 2N+2 channels of parallel digital signals.

The device for receiving an OOFDM signal described in any one of the foregoing embodiments may further include: a band-pass filter, configured to filter the OFDM analog signal obtained by the optical detector, so as to eliminate noise introduced during direct detection and noise introduced during transmission in the optical fiber.

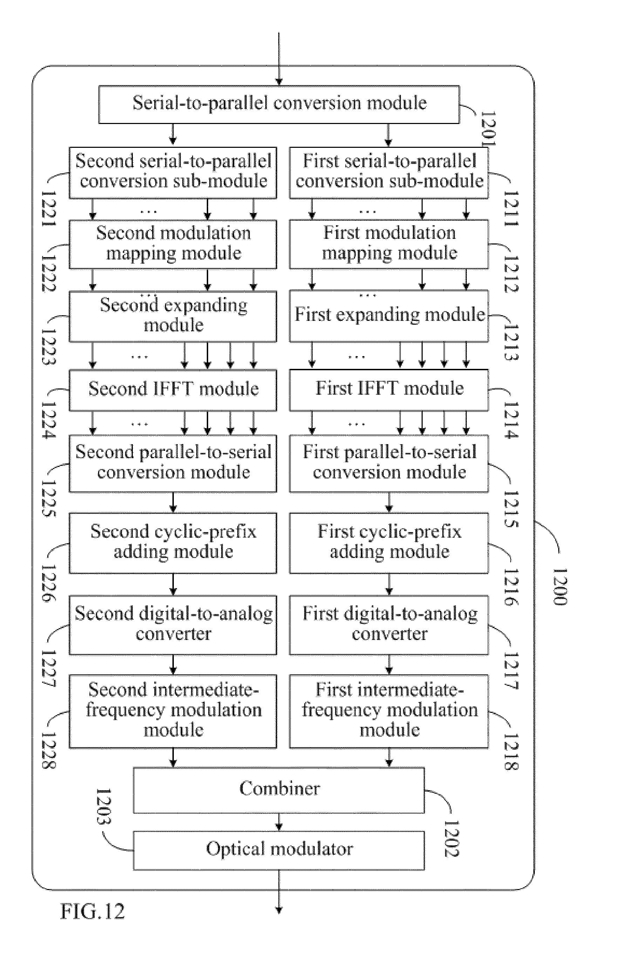

An embodiment of the present invention further provides a device for generating a sub-carrier multiplexing OOFDM signal, and a structure of the device for generating a sub-carrier multiplexing OOFDM signal is as shown in FIG 12. The device includes: a serial-to-parallel conversion module 1201, a first serial-to-parallel conversion sub-module 1211, a second serial-to-parallel conversion sub-module 1221, a first modulation mapping module 1212, a second modulation mapping module 1222, a first expanding module 1213, a second expanding module 1223, a first IFFT module 1214, a second IFFT module 1224, a first parallel-to-serial conversion module 1215, a second parallel-to-serial conversion module 1225, a first cyclic-prefix adding module 1216, a second cyclic-prefix adding module 1226, a first digital-to-analog converter 1217, a second digital-to-analog converter 1227, a first intermediate-frequency modulation module 1218, a second intermediate-frequency modulation module 1228, a combiner 1202 and an optical modulator 1203.

In this embodiment, the serial-to-parallel conversion module 1201 converts a channel of serial data to be transmitted to two channels of relatively low-speed data, namely, a first channel of data and a second channel of data.

The first serial-to-parallel conversion sub-module 1211 converts the first channel of data to $N_1$ channels of parallel data; the second serial-to-parallel conversion sub-module 1221 converts the second channel of data stream to $N_2$ channels of parallel data. Here, both $N_1$ and $N_2$ are integers greater than or equal to 2, and the value of $N_1$ may be not equal to the value of $N_2$.

The first modulation mapping module 1212 performs modulation mapping on the $N_1$, channels of data according to a predetermined modulation mode to obtain $N_1$ channels of information sequences; the second modulation mapping module 1222 performs modulation mapping on the $N_2$ channels of data according to a predetermined modulation mode to obtain $N_2$ channels of information sequences. Modulation mapping in this embodiment is the same as that in other embodiments of this application, and are not detailed here.

The first expanding module 1213 expands the $N_1$ channels of information sequences to $2N_1+2$ channels of information sequences according to characteristics of the Hermitian symmetric structure; the second expanding module 1223 expands the $N_2$ channels of information sequences to $2N_2+2$ channels of information sequences according to characteristics of the Hermitian symmetric structure. The Hermitian symmetric structure has already been introduced in other embodiments of this application, and is not repeatedly described here.

The first IFFT module 1214 performs inverse Fast Fourier Transform on the $2N_1+2$ channels of information sequences which have the Hermitian symmetric structure to implement OFDM modulation to obtain $2N_1+2$ channels of modulated signals; the second IFFT module 1224 performs inverse Fast Fourier Transform on the $2N_2+2$ channels of information sequences which have the Hermitian symmetric structure to implement OFDM modulation to obtain $2N_2+2$ channels of modulated signals.

The first parallel-to-serial conversion module 1215 performs parallel-to-serial conversion on the $2N_1+2$ channels of modulated signals to obtain a first OFDM baseband signal; the second parallel-to-serial conversion module 1225 performs parallel-to-serial conversion on the $2N_2+2$ channels of modulated signals to obtain a second OFDM baseband signal.

The first cyclic-prefix adding module 1216 is configured to add a cyclic prefix in the first OFDM baseband signal to obtain a cyclic-prefix added first OFDM baseband signal; the second cyclic-prefix adding module 1226 is configured to add a cyclic prefix in the second OFDM baseband signal to obtain a cyclic-prefix added second OFDM baseband signal.

The first digital-to-analog converter 1217 converts the cyclic-prefix added first OFDM baseband signal to a first OFDM analog signal; the second digital-to-analog converter 1227 converts the cyclic-prefix added second OFDM baseband signal to a second OFDM analog signal.

The first intermediate-frequency modulation module 1218 shifts a frequency spectrum of the first OFDM analog signal to a first intermediate frequency band to obtain an intermediate-frequency modulated first OFDM analog signal, where a specific implementation may be: the first intermediate-frequency modulation module multiplies the first OFDM analog signal by a sine signal or cosine signal, where the sine signal or cosine signal has a frequency of F1, so as to linearly shift the frequency spectrum of the first OFDM analog signal to the first intermediate frequency band; the second intermediate-frequency modulation module 1228 linearly shifts a frequency spectrum of the second OFDM analog signal to a second intermediate frequency band to obtain an intermediate-frequency modulated second OFDM analog signal, where a specific implementation may be: the second intermediate-frequency modulation module multiplies the second OFDM analog signal by a cosine signal or sine signal, where the cosine signal or sine signal has a frequency of F2, so as to linearly shift the frequency spectrum of the second OFDM analog signal to the second intermediate frequency band. The frequency F1 is different from the frequency F2, and the frequency range of the first intermediate frequency band does not coincide with the frequency range of the second intermediate frequency band.

The combiner 1202 combines the intermediate-frequency modulated first OFDM analog signal and the intermediate-frequency modulated second OFDM analog signal into one channel to obtain a sub-carrier multiplexing OFDM signal.

The optical modulator 1203 modulates the sub-carrier multiplexing OFDM signal to an optical carrier to obtain a sub-carrier multiplexing OOFDM signal. The optical modulator may be an MZM modulator.

In this embodiment, the generated sub-carrier multiplexing OFDM signal is a real signal, and the obtained sub-carrier multiplexing OOFDM signal is also a real signal, so that the device at the receiving end may recover a sub-carrier OFDM signal from the sub-carrier multiplexing OOFDM signal by adopting a direct detection method, which does not require a local oscillation light source, and therefore, does not require an algorithm to perform tracking and compensation on the frequency and phase of the local oscillation light. With the device provided in this embodiment, because the serial-to-parallel conversion module is used to convert the data to be transmitted to two channels of parallel low-speed data, and then each channel is subjected to subsequent processing until an intermediate-frequency modulated OFDM analog signal is generated, the requirement for the sampling rate of the digital-to-analog converter for each channel of data (for example, the first digital-to-analog converter and the second digital-to-analog converter) is lowered.

In this embodiment, the serial-to-parallel conversion module 1201 converts a channel of serial high-speed data to be transmitted to 2 channels of parallel low-speed data, while in other embodiments, the serial-to-parallel conversion module may convert the serial high-speed data to 3, 4 or more channels of parallel relatively low-speed data, and each channel of data is subsequently processed in the similar manner as the first channel of relatively low-speed data or the second channel of relatively low-speed data in this embodiment, except that intermediate frequency carriers of different frequencies are selected during intermediate-frequency modulation.

In other embodiments, a low-pass filter may be added behind the analog-to-digital converter to perform low-pass filtering, and a band-pass filter may be added behind the intermediate-frequency modulation module to perform band-pass filtering, so as to eliminate noise introduced during analog-to-digital conversion and intermediate-frequency modulation, and increase the signal-to-noise ratio of the signal, thus reducing the bit error rate of the receiving end.

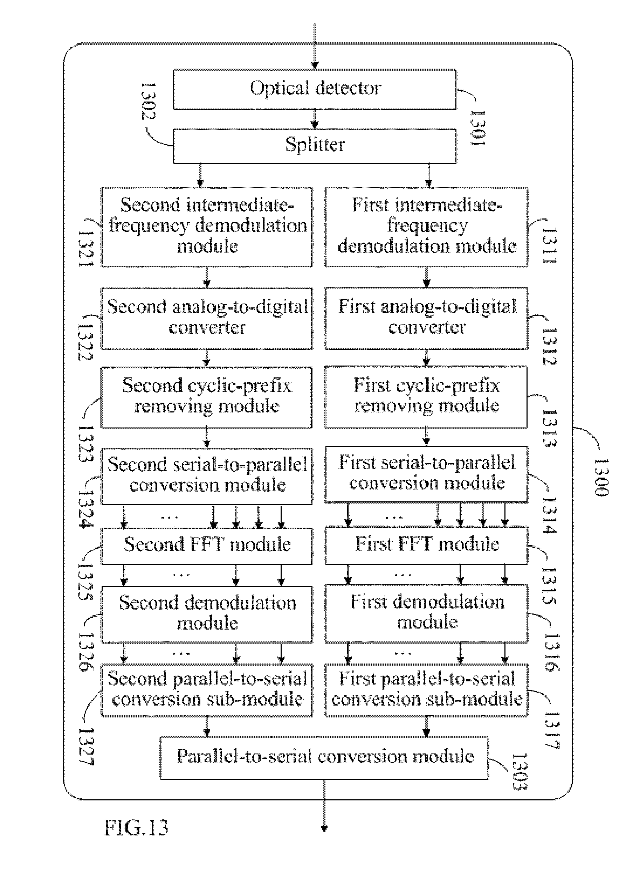

An embodiment of the present invention further provides a device for receiving a sub-carrier multiplexing OOFDM signal, as shown in FIG 13, where the device is configured to receive a sub-carrier multiplexing OOFDM signal generated by the device shown in FIG 12, and includes: an optical detector 1301, a splitter 1302, a first intermediate-frequency demodulation module 1311, a second intermediate-frequency demodulation module 1321, a first analog-to-digital converter 1312, a second analog-to-digital converter 1322, a first cyclic-prefix removing module 1313, a second cyclic-prefix removing module 1323, a first serial-to-parallel conversion module 1314, a second serial-to-parallel conversion module 1324, a first FFT module 1315, a second FFT module 1325, a first demodulation module 1316, a second demodulation module 1326, a first parallel-to-serial conversion sub-module 1317, a second parallel-to-serial conversion sub-module 1327, and a parallel-to-serial conversion module 1303.

The optical detector 1301 receives a sub-carrier multiplexing OOFDM signal transmitted in an optical fiber, and performs direct detection on the sub-carrier multiplexing OOFDM signal to obtain a sub-carrier multiplexing OFDM signal.

The splitter 1302 splits the sub-carrier multiplexing OFDM signal into a first channel of sub-carrier multiplexing OFDM signal and a second channel of sub-carrier multiplexing OFDM signal.

The first intermediate-frequency demodulation module 1311 performs intermediate-frequency demodulation on the first channel of sub-carrier multiplexing OFDM signal to obtain a first OFDM analog signal; the second intermediate-frequency demodulation module 1321 performs intermediate-frequency demodulation on the first channel of sub-carrier multiplexing OFDM signal to obtain a second OFDM analog signal. It should be particularly noted that, in this embodiment, both the first intermediate-frequency demodulation module and the second intermediate-frequency demodulation module are integrated with a low-pass filter, while in other embodiments, the intermediate-frequency demodulation modules may not be integrated with a low-pass filter, but instead, a low-pass filter is added respectively between the first intermediate-frequency demodulation module and the first analog-to-digital converter and between the second intermediate-frequency demodulation module and the second analog-to-digital converter, and configured to perform low-pass filtering on the signal obtained by the intermediate-frequency modulation module, and then input the signal obtained after filtering to the analog-to-digital converter for subsequent processing.

In this embodiment, the process that the first intermediate-frequency demodulation module 1311 performs intermediate-frequency demodulation on the first channel of sub-carrier multiplexing OFDM signal to obtain the first OFDM analog signal may specifically be: the first intermediate-frequency demodulation module multiplies the first channel of sub-carrier multiplexing OFDM signal by an intermediate frequency signal having a frequency of F1, and then the low-pass filter filters the signal obtained by multiplication to obtain the first OFDM analog signal. The processing of the second intermediate-frequency demodulation module 1321 is similar, and is not repeatedly described here.

The first analog-to-digital converter 1312 converts the first OFDM analog signal to a first OFDM digital signal; the second analog-to-digital converter 1322 converts the second OFDM analog signal to a second OFDM digital signal.

The first cyclic-prefix removing module 1313 removes a cyclic prefix in the first OFDM digital signal; the second cyclic-prefix removing module 1323 removes a cyclic prefix in the second OFDM digital signal.

The first serial-to-parallel conversion module 1314 converts a cyclic-prefix removed first OFDM digital signal to $2N_1+2$ channels of digital signals; the second serial-to-parallel conversion module 1324 converts a cyclic-prefix removed second OFDM digital signal to $2N_2+2$ channels of digital signals. In this embodiment, the values of $N_1$ and $N_2$ are respectively the same as the values of $N_1$ and $N_2$ in the sending end.

The first FFT module 1315 performs Fast Fourier Transform on the $2N_1+2$ channels of digital signals to implement OFDM demodulation to obtain $2N_1+2$ channels of information sequences which have a Hermitian symmetric structure; the second FFT module 1325 performs Fast Fourier Transform on the $2N_2+2$ channels of digital signals to implement OFDM demodulation to obtain $2N_2+2$ channels of information sequences which have a Hermitian symmetric structure.

The first demodulation module 1316 selects the $2^{nd}$ to $(N_1+1)^{th}$ channels of information sequences from the $2N_1+2$ channels of information sequences which have the Hermitian symmetric structure for demodulation to obtain $N_1$ channels of parallel low-speed data; the second demodulation module 1326 selects the $2^{nd}$ to $(N_2+1)^{th}$ channels of information sequences from the $2N_2+2$ channels of information sequences which have the Hermitian symmetric structure for demodulation to

obtain $N_2$ channels of parallel low-speed data. Here, demodulation is a reverse process to modulation mapping in the process of generating a sub-carrier multiplexing OOFDM, and the corresponding relationship between the two has already been described in other embodiments of this application, and are not repeatedly described here.

The first parallel-to-serial conversion sub-module 1317 performs parallel-to-serial conversion on the $N_1$ channels of parallel low-speed data to obtain a first channel of serial data; the second parallel-to-serial conversion sub-module 1327 performs parallel-to-serial conversion on the $N_2$ channels of parallel low-speed data to obtain a second channel of serial data.

The parallel-to-serial conversion module 1303 is configured to perform serial-to-parallel conversion on the first channel of serial data and the second channel of serial data to obtain a channel of serial data. The channel of serial data is the data to be transmitted at the sending end.

Compared with the prior art, because the generated sub-carrier multiplexing OOFDM signal is a real signal, and only carries amplitude information, the device for receiving a sub-carrier multiplexing OOFDM signal may convert the sub-carrier multiplexing OOFDM signal to a sub-carrier multiplexing OFDM signal by adopting a direct detection method, which does not require a local oscillation light source, and therefore, does not require an algorithm to perform tracking and compensation on the frequency and phase of the optical carrier, so that the implementation is simple.

It should be noted that, if the serial-to-parallel conversion module 1201 converts the serial high-speed data to M (M is an integer greater than 2) channels in the process of generating a sub-carrier multiplexing OOFDM signal, the splitter 1302 in this embodiment splits the sub-carrier multiplexing OFDM signal obtained by the optical detector 1301 into M channels correspondingly, and each channel is subsequently processed in the same manner as that of the first channel of sub-carrier multiplexing OFDM signal or the second channel of sub-carrier multiplexing OFDM signal.

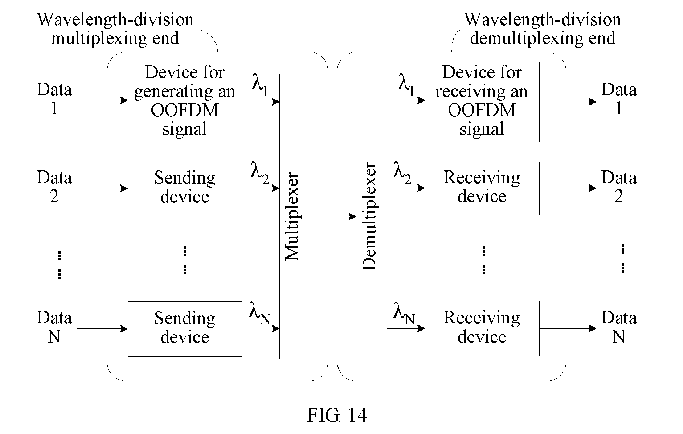

An embodiment of the present invention further provides a wavelength-division multiplexing system, and a structure of the wavelength-division multiplexing system is as shown in FIG 14. The system includes a wavelength-division multiplexing end and a wavelength-division demultiplexing end.

The wavelength-division multiplexing end includes a multiplexer and at least one device for generating an OOFDM signal having the structure shown in FIG 5. The device for generating an OOFDM signal having the structure shown in FIG 5 is configured to modulate one of wavelengths (for example, wavelength $\lambda_1$) to generate an OOFDM signal. The multiplexer multiplexes N-1 (N is an integer greater than or equal to 2) signals that respectively have wavelengths of $\lambda_2, \lambda_3, ..., \lambda_N$ and the OOFDM signal to form a channel of multiplexed signal, and sends the multiplexed signal to the wavelength-division demultiplexing end.

The wavelength-division demultiplexing end includes a demultiplexer and at least one device for receiving an OOFDM signal having the structure shown in FIG 9. The demultiplexer is configured to receive the multiplexed signal sent by the wavelength-division multiplexing end, and demultiplex the multiplexed signal to obtain N signals that respectively have wavelengths of $\lambda_1, \lambda_2, ..., \lambda_N$, as shown in FIG 14, where the signal that has the wavelength of $\lambda_1$ is an OOFDM signal. The device for receiving an OOFDM signal having the structure shown in FIG 9 receives an OOFDM signal obtained by demultiplexing and recovers original data.

In the wavelength-division multiplexing system shown in FIG 14, sending devices are configured to process data to be transmitted (for example, data 2, 3, ..., N), and finally modulate the data to optical carriers that have corresponding wavelengths (for example, wavelengths $\lambda_2, \lambda_3, ..., \lambda_N$), to obtain signal light. These sending devices may be existing optical transmitters such as optical transmitters that adopt a QPSK modulation mode, or be the device for generating an OOFDM signal having the structure shown in FIG 5. Receiving devices in FIG 14 are configured to demodulate and process signal light that has different wavelengths (for example, wavelengths $\lambda_2, \lambda_3, ..., \lambda_N$) to finally recover and obtain the data to be transmitted at the multiplexing end (for example, data 2, 3, ..., N). The receiving devices correspond to the sending devices at the multiplexing end one by one, that is, if the sending device adopts a modulation mode when generating signal light, the receiving device demodulates the received signal light by adopting a demodulation mode corresponding to the modulation mode, for example, if the signal light having the wavelength of $\lambda_2$ is obtained by an optical transmitter adopting the QPSK modulation mode, a corresponding optical receiver at the wavelength-division demultiplexing end is adopted to perform QPSK demodulation on the signal light having the wavelength of $\lambda_2$ to finally recover the data 2 to be transmitted at the multiplexing end.

In this embodiment, by adopting OOFDM modulation for a certain wavelength in the wavelength-division multiplexing system, the transmission capacity of the wavelength may be increased. In other embodiments, if OOFDM modulation is adopted for multiple wavelengths in the wavelength-division multiplexing system, not only the transmission capacity of each single wavelength is increased, but also the transmission capacity of the entire wavelength-division multiplexing system is increased.

Persons of ordinary skill in the art should understand that, all of or part of the steps in the methods of the foregoing embodiments may be implemented by a program instructing relevant hardware. The program may be stored in a computer readable storage medium.

The storage medium may be a magnetic disk, an optical disk, a Read-Only Memory (Read-Only Memory, ROM), or a Random Access Memory (Random Access Memory, RAM).

The method and device for generating and receiving an OOFDM signal, and the wavelength-division multiplexing system according to the embodiments of the present invention are described in detail above. The principle and implementation of the present invention are described here by using specific examples. The description about the foregoing embodiments is merely provided for ease of understanding of the methods and core ideas of the present invention. Meanwhile, persons of ordinary skill in the art can make variations and modifications to the present invention in terms of the specific implementations and application scopes according to the ideas of the present invention. Therefore, the specification shall not be construed as limitations to the present invention.

**Claims**

1. A method for generating an optical orthogonal frequency division multiplexing, OOFDM, signal, comprising:

    converting a channel of serial high-speed data to N channels of parallel low-speed data;
    performing modulation mapping on the N channels of parallel low-speed data respectively according to a predetermined modulation mode to obtain N channels of information sequences;
    expanding the N channels of information sequences to 2N+2 channels of information sequences which have a Hermitian symmetric structure;
    performing inverse Fast Fourier Transform on the 2N+2 channels of information sequences, and then performing parallel-to-serial conversion to obtain an OFDM baseband signal;
    performing digital-to-analog conversion on the OFDM baseband signal to obtain an OFDM analog signal; and
    modulating the OFDM analog signal to an optical carrier to obtain an OOFDM signal.

2. The method according to claim 1, wherein after the performing inverse Fast Fourier Transform on the 2N+2 channels of information sequences, and then performing parallel-to-serial conversion to obtain the OFDM baseband signal, the method further comprises:

    adding a cyclic prefix in the OFDM baseband signal to obtain a cyclic-prefix added OFDM baseband signal; and correspondingly,
    the performing digital-to-analog conversion on the OFDM baseband signal to obtain the OFDM baseband signal specifically comprises:

performing analog-to-digital conversion on the cyclic-prefix added OFDM baseband signal to obtain the OFDM analog signal.

3. The method according to claim 1, wherein after the performing digital-to-analog conversion on the OFDM baseband signal to obtain the OFDM analog signal, the method further comprises:

linearly shifting a frequency spectrum of the OFDM analog signal to an intermediate frequency band to obtain an intermediate-frequency modulated OFDM analog signal; and correspondingly,
the modulating the OFDM analog signal to the optical carrier to obtain the OOFDM signal specifically comprises:

modulating the intermediate-frequency modulated OFDM analog signal to the optical carrier to obtain the OOFDM signal.

4. The method according to any one of claims 1 to 3, wherein after the modulating the OFDM analog signal to the optical carrier to obtain the OOFDM signal, the method further comprises:

filtering the OOFDM signal to obtain a single sideband OOFDM signal.

5. A method for receiving an optical orthogonal frequency division multiplexing, OOFDM, signal, comprising:

receiving an OOFDM signal, and performing direct detection on the OOFDM signal to obtain an OFDM analog signal;
converting the OFDM analog signal to an OFDM digital signal;
performing serial-to-parallel conversion on the OFDM digital signal to obtain 2N+2 channels of parallel digital signals;
performing Fast Fourier Transform on the 2N+2 channels of parallel digital signals to obtain 2N+2 channels of information sequences which have a Hermitian symmetric structure;
selecting the $2^{nd}$ to $(N+1)^{th}$ channels of information sequences from the 2N+2 channels of information sequences which have the Hermitian symmetric structure for demodulation to obtain N channels of parallel low-speed data; and
performing parallel-to-serial conversion on the N channels of parallel low-speed data to obtain a channel of serial high-speed data.

6. The method according to claim 5, wherein after the receiving the OOFDM signal, and performing direct detection on the OOFDM signal to obtain the OFDM analog signal, the method further comprises:

perform intermediate-frequency demodulation on the OFDM analog signal to obtain an OFDM analog baseband signal; and correspondingly, the converting the OFDM analog signal to the OFDM digital signal specifically comprises: converting the OFDM analog baseband signal to the OFDM digital signal.

7. The method according to claim 5 or 6, wherein before the performing serial-to-parallel conversion on the OFDM digital signal to obtain the 2N+2 channels of parallel digital signals, the method further comprises: removing a cyclic prefix in the OFDM digital signal.

8. A device for generating an optical orthogonal frequency division multiplexing OOFDM signal, comprising:

a serial-to-parallel conversion module, configured to convert a channel of serial high-speed data to N channels of parallel low-speed data;
a modulation mapping module, configured to perform modulation mapping on the N channels of parallel low-speed data respectively according to a predetermined modulation mode to obtain N channels of information sequences;
an expanding module, configured to expand the N channels of information sequences to 2N+2 channels of information sequences which have a Hermitian symmetric structure;
an inverse Fast Fourier Transform module, configured to perform inverse Fast Fourier Transform on the 2N+2 channels of information sequences to obtain 2N+2 channels of modulated signals;
a parallel-to-serial conversion module, configured to perform parallel-to-serial conversion on the 2N+2 channels of modulated signals to obtain an OFDM baseband signal;
a digital-to-analog converter, configured to convert the OFDM baseband signal to an OFDM analog signal; and
an optical modulator, configured to modulate the OFDM analog signal to an optical carrier to obtain an OOFDM signal.

9. The device according to claim 8, further comprising:

a cyclic-prefix adding module, configured to add a cyclic prefix in the OFDM baseband signal obtained by the serial-to-parallel conversion module to obtain a cyclic-prefix added OFDM baseband signal; wherein correspondingly,
the digital-to-analog converter is specifically configured to convert the cyclic-prefix added OFDM baseband signal to an OFDM analog signal.

**10.** The device according to claim 9, further comprising:

an intermediate-frequency modulation module, configured to shift a frequency spectrum of the OFDM analog signal to an intermediate frequency band to obtain an intermediate-frequency modulated OFDM analog signal; wherein correspondingly,
the optical modulator is specifically configured to modulate the intermediate-frequency modulated OFDM analog signal to an optical carrier to obtain an OOFDM signal.

**11.** The device according to any one of claims 8 to 10, further comprising:

a filter, configured to filter the OOFDM signal to obtain a single sideband OOFDM signal.

**12.** A device for receiving an OOFDM signal, comprising:

an optical detector, configured to receive an OOFDM signal, and perform direct detection on the OOFDM signal to obtain an OFDM analog signal;
an analog-to-digital converter, configured to convert the OFDM analog signal to an OFDM digital signal;
a serial-to-parallel conversion module, configured to perform serial-to-parallel conversion on the OFDM digital signal to obtain 2N+2 channels of parallel digital signals;
a Fast Fourier Transform module, configured to perform Fast Fourier Transform on the 2N+2 channels of digital signals to obtain 2N+2 channels of information sequences which have a Hermitian symmetric structure;
a demodulation module, configured to select the $2^{nd}$ to $(N+1)^{th}$ channels of information sequences from the 2N+2 channels of information sequences which have the Hermitian symmetric structure for demodulation to obtain N channels of parallel low-speed data; and
a parallel-to-serial conversion module, configured to perform parallel-to-serial conversion on the N channels of parallel low-speed data to obtain a channel of serial high-speed data.

**13.** The device according to claim 12, further comprising:

an intermediate-frequency demodulation module, configured to perform intermediate-frequency demodulation on the OFDM analog signal to obtain an OFDM analog baseband signal; wherein correspondingly,
the analog-to-digital converter is specifically configured to convert the OFDM analog baseband signal to an OFDM digital signal.

**14.** The device according to claim 12 or 13, further comprising:

a cyclic-prefix removing module, configured to remove a cyclic prefix in the OFDM digital signal.

**15.** A device for generating a sub-carrier multiplexing OOFDM signal, comprising:

a first serial-to-parallel conversion module, configured to convert a channel of serial high-speed data to at least two channels of parallel low-speed data;
a first serial-to-parallel conversion sub-module, configured to convert one channel of low-speed data in the two channels of parallel low-speed data to $N_1$ channels of parallel data;
a second serial-to-parallel conversion sub-module, configured to convert the other channel of low-speed data in the two channels of parallel low-speed data to $N_2$ channels of parallel data;
a first modulation mapping module, configured to perform modulation mapping on the $N_1$ channels of parallel data respectively according to a predetermined modulation mode to obtain $N_1$ channels of information sequences;
a second modulation mapping module, configured to perform modulation mapping on the $N_2$ channels of parallel data respectively according to a predetermined modulation mode to obtain $N_2$ channels of information sequences;
a first expanding module, configured to expand the $N_1$ channels of information sequences to $2N_1+2$ channels of information sequences which have a Hermitian symmetric structure;
a second expanding module, configured to expand the $N_2$ channels of information sequences to $2N_2+2$ channels of information sequences which have a Hermitian symmetric structure;
a first inverse Fast Fourier Transform module, configured to perform inverse Fast Fourier Transform on the $2N_1+2$ channels of information sequences to implement OFDM modulation to obtain $2N_1+2$ channels of modulated signals;
a second inverse Fast Fourier Transform module, configured to perform inverse Fast Fourier Transform on the $2N_2+2$ channels of information sequences to implement OFDM modulation to obtain $2N_2+2$ channels of modulated signals;
a first parallel-to-serial conversion module, configured to perform parallel-to-serial conversion on the $2N_1+2$ channels of modulated signals to obtain a first OFDM baseband signal;
a second parallel-to-serial conversion module, configured to perform parallel-to-serial conversion on the $2N_2+2$ channels of modulated signals to obtain a second OFDM baseband signal;

a first cyclic-prefix adding module, configured to add a cyclic prefix in the first OFDM baseband signal to obtain a cyclic-prefix added first OFDM baseband signal;

a second cyclic-prefix adding module, configured to add a cyclic prefix in the second OFDM baseband signal to obtain a cyclic-prefix added second OFDM baseband signal;

a first digital-to-analog conversion module, configured to convert the cyclic-prefix added first OFDM baseband signal to a first OFDM analog signal;

a second digital-to-analog conversion module, configured to convert the cyclic-prefix added second OFDM baseband signal to a second OFDM analog signal;

a first intermediate-frequency modulation module, configured to shift a frequency spectrum of the first OFDM analog signal to a first intermediate frequency band to obtain an intermediate-frequency modulated first OFDM analog signal;

a second intermediate-frequency modulation module, configured to shift a frequency spectrum of the second OFDM analog signal to a second intermediate frequency band to obtain an intermediate-frequency modulated second OFDM analog signal;

a combiner, configured to combine the intermediate-frequency modulated first OFDM analog signal and the intermediate-frequency modulated second OFDM analog signal into one channel to obtain a sub-carrier multiplexing OFDM signal; and

an optical modulator, configured to modulate the sub-carrier multiplexing OFDM signal to an optical carrier to obtain a sub-carrier multiplexing OOFDM signal.

16. A device for receiving a sub-carrier multiplexing OOFDM signal, configured to receive a sub-carrier multiplexing OOFDM signal generated by the device according to claim 15, comprising:

an optical detector, configured to receive the sub-carrier multiplexing OOFDM signal, and perform direct detection on the sub-carrier multiplexing OOFDM signal to obtain a sub-carrier multiplexing OFDM signal;

a splitter, configured to split the sub-carrier multiplexing OFDM signal into at least two channels of sub-carrier multiplexing OFDM signals;

a first intermediate-frequency demodulation module, configured to perform intermediate-frequency demodulation on one channel of the two channels of sub-carrier multiplexing OFDM signals to obtain a first OFDM analog signal;

a second intermediate-frequency demodulation module, configured to perform intermediate-frequency demodulation on the other channel of the two channels of sub-carrier multiplexing OOFDM signals to obtain a second OFDM analog signal;

a first analog-to-digital converter, configured to convert the first OFDM analog signal to a first OFDM baseband signal;

a second analog-to-digital converter, configured to convert the second OFDM analog signal to a second OFDM baseband signal;

a first cyclic-prefix removing module, configured to remove a cyclic prefix in the first OFDM baseband signal to obtain a cyclic-prefix removed first OFDM baseband signal;

a second cyclic-prefix removing module, configured to remove a cyclic prefix in the second OFDM baseband signal to obtain a cyclic-prefix removed second OFDM baseband signal;

a first serial-to-parallel conversion module, configured to convert the cyclic-prefix removed first OFDM baseband signal to $2N_1+2$ channels of parallel signals;

a second serial-to-parallel conversion module, configured to convert the cyclic-prefix removed second OFDM baseband signal to $2N_2+2$ channels of parallel signals;

a first Fast Fourier Transform module, configured to perform Fourier Transform on the $2N_1+2$ channels of parallel signals to obtain $2N_1+2$ channels of information sequences which have a Hermitian symmetric structure;

a second Fast Fourier Transform module, configured to perform Fourier Transform on the $2N_2+2$ channels of parallel signals to obtain $2N_2+2$ channels of information sequences which have a Hermitian symmetric structure;

a first demodulation module, configured to select the $2^{nd}$ to $(N_1+1)^{th}$ channels of information sequences from the $2N_1+2$ channels of information sequences which have the Hermitian symmetric structure for demodulation to obtain $N_1$ channels of parallel data;

a second demodulation module, configured to select the $2^{nd}$ to $(N_2+1)^{th}$ channels of information sequences from the $2N_2+2$ channels of information sequences which have the Hermitian symmetric structure for demodulation to obtain $N_2$ channels of parallel data;

a first parallel-to-serial conversion sub-module, configured to perform parallel-to-serial conversion on the $N_1$ channels of parallel data to obtain a first channel of serial data;

a second parallel-to-serial conversion sub-module, configured to perform parallel-to-serial conversion on the $N_2$ channels of parallel data to obtain a second channel of serial data;

a parallel-to-serial conversion module, configured to perform parallel-to-serial conversion on the first channel of serial data and the second channel of serial data to obtain a channel of serial data.

17. A wavelength-division multiplexing system, comprising a wavelength-division multiplexing end and a wavelength-division demultiplexing end, wherein the wavelength-division multiplexing end comprises a multiplexer and at least one device for generating an optical orthogonal frequency division multiplexing OOFDM signal according to claim 8, wherein the device for generating an OOFDM signal is configured to modulate one of wavelengths to obtain an OOFDM signal, and the multiplexer is configured to multiplex the OOFDM signal and a signal that has another wavelength to form a channel of multiplexed signal; and

the wavelength-division demultiplexing end comprises a demultiplexer and at least one device for receiving an OOFDM signal according to claim 12, wherein the demultiplexer is configured to demultiplex the multiplexed signal obtained by the multiplexer; and the device for receiving an OOFDM signal receives an OOFDM signal obtained by demultiplexing and recovers original data.

FIG. 1

Convert a channel of serial high-speed data to N channels of parallel low-speed data — S21

Perform modulation mapping on the N channels of parallel low-speed data respectively according to a predetermined modulation mode to obtain N channels of information sequences — S22

Expand the N channels of information sequences to 2N+2 channels of information sequences which have a Hermitian symmetric structure — S23

Perform inverse Fast Fourier Transform on the 2N+2 channels of information sequences, and then perform parallel-to-serial conversion to obtain an OFDM baseband signal — S24

Perform digital-to-analog conversion on the OFDM baseband signal to obtain an OFDM analog signal — S25

Modulate the OFDM analog signal to an optical carrier to obtain an OOFDM signal — S26

FIG. 2

FIG. 3

| Receive an OOFDM signal, and perform direct detection on the OOFDM signal to obtain an OFDM analog signal | S41 |

↓

| Convert the OFDM analog signal to an OFDM digital signal | S42 |

↓

| Perform serial-to-parallel conversion on the OFDM digital signal to obtain 2N+2 channels of parallel digital signals | S43 |

↓

| Perform Fast Fourier Transform on the 2N+2 channels of digital signals to obtain 2N+2 channels of information sequences which have a Hermitian symmetric structure | S44 |

↓

| Select the $2^{nd}$ to $(N+1)^{th}$ channels of information sequences from the 2N+2 channels of information sequences which have the Hermitian symmetric structure for demodulation to obtain N channels of parallel low-speed data | S45 |

↓

| Perform parallel-to-serial conversion on the N channels of parallel low-speed data to obtain a channel of serial high-speed data | S46 |

FIG. 4

FIG. 5

FIG. 6

70

Data → Serial-to-parallel conversion module (71) → Modulation mapping module (72) → Expanding module (73) → IFFT module (74) → Parallel-to-serial conversion module (75) → Cyclic-prefix adding module (76) → Digital-to-analog converter (77) → Optical modulator (78) → OOFDM signal

FIG. 7

80

Data → Serial-to-parallel conversion module (81) → Modulation mapping module (82) → Expanding module (83) → IFFT module (84) → Parallel-to-serial conversion module (85) → Cyclic-prefix adding module (86) → Digital-to-analog converter (87) → Intermediate-frequency modulation module (88) → Optical modulator (89) → OOFDM signal

FIG. 8

90

OOFDM signal → Optical detector (91) → Analog-to-digital converter (92) → Serial-to-parallel conversion module (93) → FFT module (94) → Demodulation module (95) → Parallel-to-serial conversion module (96) → Original data

FIG. 9

100

| | 101 | 102 | 103 | 104 | 105 | 106 | 107 |

OOFDM signal → Optical detector → Intermediate-frequency demodulation module → Analog-to-digital converter → Serial-to-parallel conversion module → FFT module → Demodulation module → Parallel-to-serial conversion module → Original data

(S/P outputs: 1, 2, 3, N+1, … 2N+2; FFT outputs: 2, 3, … N+1, N+2, … 2N+2)

FIG. 10

110

| 111 | 112 | 113 | 114 | 115 | 116 | 117 | 118 |

OOFDM signal → Optical detector → Intermediate-frequency demodulation module → Analog-to-digital converter → Cyclic-prefix removing module → Serial-to-parallel conversion module → FFT module → Demodulation module → Parallel-to-serial conversion module → Original data

(S/P outputs: 1, 2, 3, N+1, … 2N+2; FFT outputs: 2, 3, … N+1, N+2, … 2N+2)

FIG. 11

FIG.12

FIG.13

Wavelength-division
multiplexing end

Wavelength-division
demultiplexing end

Data
1 → Device for generating an OOFDM signal → $\lambda_1$

Multiplexer

Demultiplexer

$\lambda_1$ → Device for receiving an OOFDM signal → Data 1

Data
2 → Sending device → $\lambda_2$

$\lambda_2$ → Receiving device → Data 2

⋮ ⋮

Data
N → Sending device → $\lambda_N$

$\lambda_N$ → Receiving device → Data N

FIG. 14

# INTERNATIONAL SEARCH REPORT

| | International application No. |
|---|---|
| | PCT/CN2010/073793 |

**A. CLASSIFICATION OF SUBJECT MATTER**

H04L27/26(2006.01)i

According to International Patent Classification (IPC) or to both national classification and IPC

**B. FIELDS SEARCHED**

Minimum documentation searched (classification system followed by classification symbols)

IPC: H04L,H04B,H04Q,H04W

Documentation searched other than minimum documentation to the extent that such documents are included in the fields searched

Electronic data base consulted during the international search (name of data base and, where practicable, search terms used)

CPRS,CNKI,WPI,EPODOC,TXTWO1: OFDM, OOFDM, OPTICAL W OFDM, PHASE?, FREQUENCY, TRACK+, COMPENSAT+, HERMITE

**C. DOCUMENTS CONSIDERED TO BE RELEVANT**

| Category* | Citation of document, with indication, where appropriate, of the relevant passages | Relevant to claim No. |
|---|---|---|
| A | CN1992703A(ALCATEL LUCENT) 04 Jul. 2007(04.07.2007) the whole document | 1-17 |
| A | EP2031790A1(TELEFONAKTIEBOLAGET ERICSSON L M) 04 Mar. 2009(04.03.2009) the whole document | 1-17 |
| A | WO2008056902 A1(ELECTRONICS&TELECOM RES INST) 15 May 2008(15.05.2008) the whole document | 1-17 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 09 Sept. 2010(09.09.2010) | **23 Sep. 2010 (23.09.2010)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | **WANG, Fei** Telephone No. (86-10)62411237 |

Form PCT/ISA /210 (second sheet) (July 2009)

## INTERNATIONAL SEARCH REPORT
### Information on patent family members

| | International application No. |
|---|---|
| | PCT/CN2010/073793 |

| Patent Documents referred in the Report | Publication Date | Patent Family | Publication Date |
|---|---|---|---|
| CN1992703A | 04.07.2007 | KR20070066872A | 27.06.2007 |
| | | EP1802064A1 | 27.06.2007 |
| | | US2007147227A1 | 28.06.2007 |
| | | JP2007174651A1 | 05.07.2007 |
| | | AT397822T | 15.06.2008 |
| | | EP1802064B1 | 04.06.2008 |
| | | DE602005007372E | 17.07.2008 |
| EP2031790A1 | 04.03.2009 | WO2009027261A2 | 05.03.2009 |
| | | WO2009027261A3 | 22.05.2009 |
| WO2008056902 A1 | 15.05.2008 | KR20080042644A | 15.05.2008 |
| | | KR100849493B1 | 31.07.2008 |
| | | US2010061471A1 | 11.03.2010 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910107890